# EUROPEAN PATENT APPLICATION

(11) **EP 4 250 396 A1**
(43) Date of publication of application: **27.09.2023**
(21) Application number: 23163338.9
(22) Date of filing: 22.03.2023
(51) Int. Cl.: H01M 4/24, H01M 4/32, H01M 4/36, H01M 4/52, H01M 4/62, H01M 10/26, H01M 10/34, H01M 50/417, H01M 50/426

(54) **NICKEL-METAL HYDRIDE BATTERY**

(30) Priority: 23.03.2022 CN 202210290427
(71) Applicant: Dongguan Chao Ba Batteries Co. Ltd., Dongguan City, Guangdong (CN)
(72) Inventor: YU, Hong Shuai, Dongguan City, Guangdong (CN); WANG, Mingde, Dongguan City, Guangdong (CN); ZOU, Jian Ping, Dongguan City, Guangdong (CN); HU, Xiao Min, Dongguan City, Guangdong (CN)
(74) Representative: De Arpe Tejero, Manuel

(57) **Abstract**

The invention relates to a Ni-MH battery. The positive electrode active material of the Ni-MH battery is made of spherical nickel hydroxide coated with β-CoOOH; the positive electrode additive used in the positive electrode of the nickel-hydrogen battery comprises tungsten and zinc, and the positive electrode additive further comprises at least one of yttrium and ytterbium. The separator of the battery is made of grafted or fluorinated or sulfonated polypropylene separator. The electrolyte of the Ni-MH battery is an alkaline aqueous solution composed of alkali metal hydroxide, and the concentration of alkali metal hydroxide is 5.5 - 8.0 mol /L. The negative electrode additive used in the negative electrode of the Ni-MH battery comprises yttrium. The Ni-MH battery can effectively reduce the increase in internal resistance of the Ni-MH battery during long-term overcharging in a high-temperature environment, and prolong the service life of the Ni-MH battery.

## Description

### Field of the Invention:

The present invention relates to the technical field of rechargeable battery. In particular, the present invention relates to a nickel-metal hydride (Ni-MH) battery with excellent high-temperature performance.

### Background of the Invention:

Ni-MH batteries using hydrogen storage alloys as negative electrode active materials not only have excellent power characteristics, but also high durability (lifetime characteristics and storage characteristics). Therefore, Ni-MH batteries are widely used in various consumer electronics products and electric vehicles. CaCu5-type (AB₅ type) alloys with a crystalline structure are mainly used as the hydrogen storage alloys. For the purpose of improving durability and increasing capacity, hydrogen storage alloys used in conventional Ni-MH batteries generally contain at least one of rare earth elements, Ni, Co, Mn, Al, Cu, and Mg. With the above-mentioned constitution, Ni-MH rechargeable battery with high capacity and improved cycle life and discharge capacity at a low temperature around -20°C can be achieved.

However, the existing Ni-MH batteries have the following technical problems:
1. When the Ni-MH battery is used at a temperature exceeding 30°C, its charging efficiency will decrease as the temperature rises, and using the battery in a high temperature environment (≥40°C) will cause performance degradation and accelerated attenuation;
2. During a long-term low-current float charging of Ni-MH batteries at an ambient temperature of about 40°C, the oxygen produced through the oxygen evolution of the positive electrode cannot be quickly recombined by the negative electrode, and the oxygen oxidizes the hydrogen storage alloy, consuming the water in the electrolyte. At the same time, the hydrogen storage alloy will be corroded in the strong alkaline environment, further consuming the water in the electrolyte, causing the internal resistance of the Ni-MH battery to increase, and the discharging capacity of the nickel-hydrogen battery to decrease. Therefore, the effective lifetime of the existing Ni-MH batteries working continuously at an ambient temperature of about 40°C is normally less than 4 years.

### Summary of the Invention:

The present invention provides a technical solution for solving the above-mentioned technical problems, and an object of the present invention is to provide a Ni-MH battery with improved lifetime characteristics at high temperatures.

It should be noted that the Ni-MH battery provided by the present invention includes: a positive electrode, a negative electrode containing a negative electrode active material, a separator and an electrolyte disposed between the positive electrode and the negative electrode. The present invention also provides a method for processing a negative electrode active material for Ni-MH battery and the negative electrode active material obtained by the method. The method comprises the step of stirring the negative electrode active material for Ni-MH battery in an aqueous alkali solution.

It needs to be explained that the high-temperature environment described below is an ambient temperature of 38-45°C unless otherwise specified.

In order to improve lifetime characteristics of Ni-MH batteries at high temperature, the ABs-type hydrogen storage alloy used in the existing Ni-MH battery are doped with one or more of the elements: Mg, Ni, Al, Co, Fe, Ga, Zn, Sn, Cu, Si, B, Nb, W, Mo, V, Cr, Ta, Li, P, S. However, such technical solution has limited improvement on the lifetime characteristics of the Ni-MH battery in a high-temperature environment. Due to repeated charging and discharging at high temperatures, the hydrogen storage alloy deteriorates. Specifically, the hydrogen storage alloy deteriorates owning to repetitive expansion and contraction caused by repeated charging and discharging at high temperatures and atoms contained in the hydrogen storage alloy are significantly eluted. Therefore, the battery reaction of the Ni-MH battery becomes insufficient when the Ni-MH battery are charged and discharged repeatedly in a high-temperature environment.

According to one aspect of the present invention, a technical solution is provided to effectively reduce the increase in the internal resistance of the battery when the Ni-MH battery is floated at high temperature. By implemented the provided method, the effective lifetime of the Ni-MH battery working in a high-temperature environment around 40°C is increased to no less than 10 years. When the Ni-MH battery is charged and discharged according to the standard IEC61951-2-2011 7.5.2.3 procedure in a high-temperature environment at around 40°C, the discharge capacity of the Ni-MH battery is still not less than 75% of the nominal capacity. The technical solution comprises:
1. The positive electrode active material of the Ni-MH battery is made of spherical nickel hydroxide coated with β-CoOOH, and the spherical nickel hydroxide is coated with β-CoOOH by chemical vapor deposition process, so the coating layer is more stable and denser, making the Ni-MH batteries not easy to be **reduced or dissolved in** high temperature environment.
2. The positive electrode additive used in the positive electrode of the nickel-hydrogen battery contains tungsten (W) and zinc (Zn), and the positive electrode additive also contains at least one of yttrium (Y) and ytterbium (Yb). The effect of the Zn element is that it can effectively reduce the expansion of the spherical nickel hydroxide when the Ni-MH battery is float-charged in a high-temperature environment, thereby avoiding the destruction of the coating layer of the spherical nickel hydroxide during the float-charging; the W element of the positive electrode additive can slowly be dissolved to form Na₂WO₄, and the formed Na₂WO₄ surrounds the spherical nickel hydroxide, which can effectively increase the oxygen evolution potential of the positive electrode. Both Y and Yb can effectively increase the oxygen evolution potential of the positive electrode when the spherical nickel hydroxide is float-charged in a high-temperature environment, and avoid the consumption of water in the electrolyte and the oxidation of the hydrogen storage alloy by the oxygen generated by the oxygen evolution of the positive electrode during the float-charging process. The elements W, Y and/or Yb can generate a synergistic effect to significantly increase the oxygen evolution potential of the positive electrode. The synergistic effect can increase the oxygen evolution potential of the positive electrode to avoid the increase in the internal pressure of the Ni-MH battery due to the oxygen generated during the float charge process, which cannot be quickly recombined at the negative electrode, thus can effectively avoid the electrolyte leakage of the Ni-MH battery.
3. The separator of the Ni-MH battery is made of grafted or fluorinated or sulfonated polypropylene separator. The fluorinated or grafted polypropylene separator will not embrittle under high temperature environment for a long time. Moreover, the hardness of polypropylene fiber for making the polypropylene separator will not be reduced after the grafting or fluorination treatment. Therefore, the durability of the separator can be kept constant. When the positive electrode and negative electrode of the Ni-MH battery expand, the diaphragm will not undergo significant compression deformation, thereby avoiding the increase in the internal resistance of the nickel-hydrogen battery caused by the decrease of the electrolyte due to compression of the separator.
4. The electrolyte of the Ni-MH battery is an alkaline aqueous solution composed of alkali metal hydroxides, including potassium hydroxide, sodium hydroxide, and lithium hydroxide, and the concentration of alkali metal hydroxide is 5.5-8.0 mol/L. If the concentration of alkali metal hydroxide in the electrolyte is higher than 8.0 mol/L, with the increase of usage time of the Ni-MH battery, the corrosion of the hydrogen storage alloy and the oxygen evolution of the spherical nickel hydroxide will cause the amount of water in the electrolyte decreases, resulting in an increase in the internal resistance of the Ni-MH battery.
5. The negative electrode active material of Ni-MH battery includes hydrogen storage alloy. The negative electrode additive used in the negative electrode contains element Y, the negative electrode contains element Y and the amount of element Y in the negative electrode is set to the impurity level. Specifically, the negative electrode containing element Y can inhibit the deterioration of the hydrogen storage alloy caused by repeated charging and discharging of the Ni-MH battery under the high temperature environment. After the element Y is dissolved in a strong alkali, it will form a protective film on the negative electrode active material, thereby effectively alleviating the corrosion of the negative electrode active material in the strong alkali environment. In one embodiment, the negative electrode active material of the Ni-MH battery contains a hydrogen storage alloy, and the hydrogen storage alloy contains La, Mg, Ni, Co, Al and Sn. The negative electrode additive used in the negative electrode of the nickel-hydrogen battery contains element Y, so that the particles contained in the hydrogen storage alloy have high corrosion resistance. At the same time, the discharge efficiency of Ni-MH batteries in high-temperature environment can be improved and the capacity reduction caused by repeated charging and discharging can be suppressed.

According to the present invention, it is possible to provide a high-capacity Ni-MH battery with improved high-temperature lifetime characteristics by the above-mentioned solution. The nickel-hydrogen battery provided by the present invention is suitable to be used as a power source of various devices. Particularly, the nickel-hydrogen battery provided by the present invention is suitable to be used as a power source for a hybrid vehicle used in a harsh environment,

The following will be described with specific embodiments.

### Brief Description of the Drawings:

The accompanying drawings further illustrate the present invention, but the embodiments in the accompanying drawings do not constitute any limitation to the present invention.
Figure 1 is a schematic diagram of the internal resistance change of the Ni-MH battery after charge and discharge cycling test;
Figure 2 is a schematic diagram of the discharge time change of the Ni-MH battery after charge and discharge cycling test.

### Detailed Description:

It should be understood that the specific embodiments described here are only for explanation purpose and not intended to be limiting the present invention.

In the present invention, the Ni-MH battery includes, for example, a positive electrode, a negative electrode containing a hydrogen storage alloy, a separator and an electrolyte disposed therebetween.

The positive electrode of the Ni-MH battery includes positive electrode active material and positive electrode additive. The positive electrode active material are made of spherical nickel hydroxide coated with β-CoOOH. The spherical nickel hydroxide is coated with β-CoOOH by chemical vapor deposition process. The median particle diameter D50 of the spherical nickel hydroxide is 10 -100 um. The valence state of the cobalt element in the cladding layer is 3.0 - 3.8, and based on the total mass of the positive electrode active material as 100%, the mass fraction of the coating layer to the total mass of the positive electrode active material is 1.0 - 8.0%.

The positive electrode additive contains W and Zn, wherein W is derived from oxides and/or salts containing W. Preferably, W is derived from WO₃. Zn is derived from oxides and/or salts containing Zn. Preferably, Zn is derived from ZnO. The positive electrode additive also contains at least one of Y and Yb, Y is derived from oxides and/or salts containing Y, preferably, Y is derived from Y₂O₃; Yb is derived from oxides and/or salts containing Yb, preferably, Yb is derived from Yb₂O₃.

If W in the positive electrode additive is derived from WO₃, the mass fraction of WO₃ is 0.1-2% based on the total mass of the positive active material and the positive electrode additive (as 100%). If the mass fraction of WO₃ is less than 0.1%, the high temperature lifetime characteristics of the Ni-MH battery becomes difficult to improve. If the mass fraction of WO₃ exceeds 2%, the capacity of the Ni-MH battery will be significantly reduced.

If Zn in the positive electrode additive is derived from ZnO, the mass fraction of ZnO is 0.1-2% based on the total mass of the positive active material and the positive electrode additive (as 100%). The volume change of the spherical nickel hydroxide of the Ni-MH battery increases significantly during the charge-discharge cycle. Specifically, the cracks caused by expansion and contraction due to charge-discharge become significant, and the high-temperature lifetime characteristics deteriorates. If the mass fraction of ZnO exceeds 2%, the dissolution of element Co of the cladding layer into the electrolyte is significantly increased at high temperatures, so the high-temperature life characteristics are reduced.

If Y in the positive electrode additive is derived from Y₂O₃, based on the total mass of the positive electrode active material and the positive electrode additive (as 100%), the mass fraction of Y₂O₃ is 0.1 - 2%. If Yb is derived from Yb₂O₃ in the positive electrode additive, then based on the total mass of the positive electrode active material and the positive electrode additive (as 100%), the mass fraction of Yb₂O₃ is 0.1 - 2%. If the positive electrode additive contains Y and Yb at the same time, and Y is derived from Y₂O and Yb is derived from Yb2O3, then the total mass fraction of Y₂O and Yb₂O₃ is 0.1 - 2% based on the total mass of positive electrode active material and positive electrode additive (as 100%). If the mass fraction of Y2O or/and Yb2O3 is less than 0.1%, the capacity of the Ni-MH battery is significantly reduced in high temperature. If the mass fraction of Y₂O or/and Yb₂O₃ exceeds 2%, which will form dumbbell-shaped atomic pairs in the crystal structure of spherical nickel hydroxide, resulting in deformation, the capacity of the Ni-MH battery is therefore significantly reduced as well.

The negative electrode contains a negative electrode core material and a negative electrode mixture. The negative electrode mixture contains a hydrogen storage alloy as a negative electrode active material. In addition to the negative electrode active material and negative electrode additive, the negative electrode mixture can also contain conductive agents, thickeners and binders as needed. As for the conductive agent, any material having electron conductivity can be used without particular limitation. Such material may be, for example but not limited to, graphite such as natural graphite (flaky graphite, etc.), artificial graphite, and expanded graphite; carbon blacks such as acetylene black, ketjen black, channel black, furnace black, lamp black, and pyrolytic carbon black; conductive fibers such as carbon fiber and metal fiber; metal powders such as copper; organic conductive materials such as polyphenylene derivatives, etc. Among them, artificial graphite, Ketjen black, and carbon fiber are preferable. These may be used alone or in combination of two or more. In addition, the conductive agent may exist as a coating layer covering the surface of the hydrogen storage alloy. The amount of conductive agent added is not particularly limited. As for the thickener, any material capable of imparting viscosity to the mixture slurry which is a precursor of the negative electrode mixture can be used without particular limitation. Such material may be, for example but not limited, carboxymethyl cellulose and modified products thereof, polyvinyl alcohol, methyl cellulose, polyethylene oxide, and the like. As for the binder, any material capable of binding the negative electrode mixture to the negative electrode core material can be used without particular limitation. Any of thermoplastic resin and thermosetting resin can be used as the binder. Examples of materials used as binders may include styrene-butadiene copolymer rubber, polyethylene, polypropylene, polytetrafluoroethylene, polyvinylidene fluoride, tetrafluoroethylene-hexafluoropropylene copolymer, tetrafluoroethylene-perfluoroethylene substituted alkyl vinyl ether copolymer, vinylidene fluoride-hexafluoropropylene copolymer, vinylidene fluoride-chlorotrifluoroethylene copolymer, ethylene-tetrafluoroethylene copolymer, polychlorotrifluoroethylene, vinylidene fluoride-pentafluoroethylene propylene copolymer, propylene-tetrafluoroethylene copolymer, ethylene-chlorotrifluoroethylene copolymer, vinylidene fluoride-hexafluoropropylene-tetrafluoroethylene copolymer, vinylidene fluoride-perfluoromethyl vinyl ether-tetrafluoroethylene ethylene copolymer, ethylene-acrylic acid copolymer, ethylene-acrylic acid copolymer Na+ ion cross-linked body, ethylene-methacrylic acid copolymer, ethylene-methacrylic acid copolymer Na+ ion cross-linked body, ethylene-methyl acrylate copolymer, ethylene-methyl acrylate copolymer Na+ ion cross-linked body, ethylene-methyl methacrylate copolymer, ethylene-methyl methacrylate copolymer Na+ ion cross-linked body. These materials can be used alone or in combination of two or more.

The negative electrode additive contains Y, and Y is derived from oxides and/or salts containing Y, preferably, Y is derived from Y₂O₃. Preferably, the hydrogen storage alloy contains La, Ce, Pr, Nd, Ni, Co, Mn and Al, and the hydrogen storage alloy has the ABs-type crystal structure. The preparation method of the hydrogen storage alloy is not particularly limited. For example, plasma arc melting method, high frequency melting (metal mold casting) method, mechanical alloying method, mechanical pulverization method, rapid cooling and solidification method can be used. The mechanical alloying method and the mechanical pulverization method are effective synthesis methods for easily controlling the size (particle size) and crystal form of the hydrogen storage alloy. In addition, the rapid solidification method may be used alone or in combination with a mechanical alloying method or the like. As a raw material for these methods, a mixture of simple substances containing La, Ce, Pr, Nd, Ni, Co, Mn, and Al in a predetermined ratio can be used. The negative electrode active material for Ni-MH batteries containing a hydrogen storage alloy can be supplied to a treatment method having a step of stirring in an alkaline aqueous solution. The aqueous alkali solution may contain sodium hydroxide and/or potassium hydroxide. Specifically, the aqueous alkali solution may be an aqueous sodium hydroxide solution, an aqueous potassium hydroxide solution, or an aqueous solution containing both sodium hydroxide and potassium hydroxide. The concentration of hydroxyl ions (OH-) in the alkaline aqueous solution is ideally 3 to 20 mol/L.

In the present invention, if the Y contained in the negative electrode additive is derived from Y₂O₃, the mass fraction of Y₂O₃ is 0.1 - 2% based on the total mass of the negative electrode active material and the negative electrode additive (as 100%). With Y contained in the hydrogen storage alloy, the corrosion resistance of the hydrogen storage alloy at high temperature is improved. Y has a higher affinity for oxygen and thus can reduce adjacent oxides. Therefore, the corrosion resistance at high temperature improves. When the mass fraction of Y₂O₃ is less than 0.1%, there is a possibility that the suppression of the expansion and contraction of the hydrogen storage alloy when hydrogen is intercalated and deintercalated at high temperature may be reduced. If the mass fraction of Y₂O₃ exceeds 2%, there is a possibility of substitution of Y with elements present in the lattice of the hydrogen storage alloy. In this case, there is a possibility that the reduction in durability may occur due to the reduction in the capacity of the hydrogen storage alloy and the generation of lattice defects.

The separator is made of grafted or fluorinated or sulfonated polypropylene separator. The electrolyte is an alkaline aqueous solution prepared by alkali metal hydroxides. The alkali metal hydroxides may include potassium hydroxide, sodium hydroxide, and lithium hydroxide, and the concentration of the alkali metal hydroxides is 5.5 - 8.0 mol/L. Preferably, the solvent of the alkaline aqueous solution is ionized water, and the alkaline aqueous solution includes 5.5 - 7mol/L NaOH, 0-0.5mol/L KOH and 0-0.5mol/L LiOH.

### Example 1

The preparation of the Ni-MH battery described in the present embodiment includes:

### (i) Preparation of hydrogen storage alloy

Metallic La, Ce, Pr, Nd, Ni, Co, Mn, and Al are mixed in a prescribed ratio. The obtained mixture was dissolved in a high-frequency melting furnace at 1500° C, and the molten material was rapidly cooled and solidified by a roller quenching method to obtain an ingot of a hydrogen storage alloy. The ingot of the obtained hydrogen storage alloy was heated at 800° C for 5 hours under an argon atmosphere, and then pulverized into particles with average particle diameter of 30 µm. In this way, the negative electrode active material of the Ni-MH battery described in the embodiment is obtained.

### (ii) Preparation of negative electrode

100 weight parts of the prepared negative electrode active material, 2 weight parts of Y₂O₃, 0.15 weight parts of carboxymethyl cellulose, 0.3 weight parts of acetylene carbon black, 0.7 weight parts of styrene-butadiene copolymer rubber are mixed with an appropriate amount of water to obtain a mixture slurry. This mixture slurry is coated on both surfaces of a nickel-plated core material which is made of iron punching metal. The mixture slurry is dried and pressed together with the core material by a stone roller to obtain an electrode plate. The obtained electrode plate is cut off to obtain the negative electrode of the Ni-MH battery described in the embodiment.

### (iii) Manufacture of Ni-MH battery

WO₃, ZnO, Y₂O₃, and spherical nickel hydroxide coated with β-CoOOH are mixed according to the mass ratio of 1:1:1:97 to obtain a positive electrode slurry. The positive electrode slurry is coated on the nickel foam to obtain a positive electrode. On the positive electrode, along one side parallel to its longitudinal direction, an exposed portion of the positive electrode core material is configured.

The prepared positive and negative electrodes are then used to manufacture an SC-type Ni-MH battery with a nominal capacity of 2200mAh.

Specifically, a positive electrode, a separator, and a negative electrode were laminated to obtain a laminate, and the laminate was wound into a spiral shape to produce a cylindrical electrode plate group. Sulfonated polypropylene separator is used as the separator. The outermost periphery of the obtained plate group is the negative electrode. Protrude the exposed portion of the positive electrode core material in the direction of the winding axis (i.e., longitudinal direction) from one end of the obtained electrode plate group. Positive electrode current collector plate is welded on the positive electrode core material protruding from the plate group. One end of the positive electrode lead is connected to the positive electrode current collector, the other end of the positive electrode lead is connected to a sealing plate which has an external terminal and a safety valve mechanism composed of a rubber valve, and the sealing plate is connected to the positive electrode current collecting plate. The electrode plate group is accommodated in a battery case formed of a cylindrical bottomed can so that the negative electrode located at the outermost periphery of the electrode plate group is connected to the battery case. Then, an electrolytic solution was injected into the battery case. The solvent of the electrolyte is ionic water, and the electrolyte includes 5.5 -7mol/L of NaOH, 0-0.5mol/L of KOH and 0 - 0.5mol/L of LiOH. Finally, the opening end of the battery case was caulked to the sealing plate via a gasket provided on the peripheral edge of the sealing plate to seal the opening of the battery case, so that a NiMH battery is obtained.

### Comparative example 1

Existing SC type, nominal capacity (NC) 02200mAh Ni-MH battery

### Comparison test

The Ni-MH battery provided in Example 1 and the Ni-MH battery provided in Comparative Example 1 were activated after being left at room temperature for 24 hours, and the charge and discharge cycling tests were performed in the manner described in Table 1 after activation. A charge-discharge cycle includes: the Ni-MH battery is charged at 0.1C for 16h in a high temperature environment, rested for 1h, and then discharged to 1.0V at 0.25C.

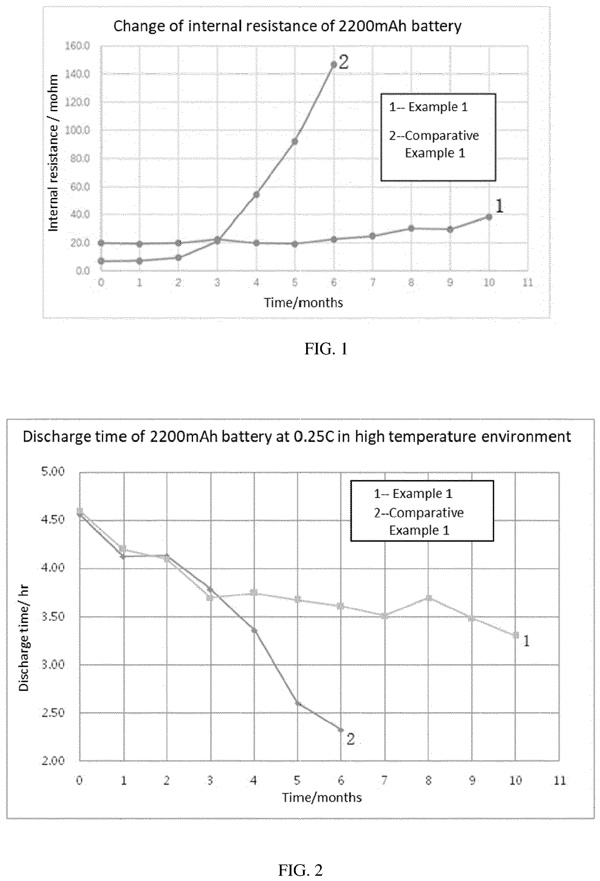

After the charge and discharge cycling test, the internal resistance change of the Ni-MH battery provided by Example 1 and the internal resistance change of the Ni-MH battery provided by Comparative Example 1 are shown in Figure 1. After 10 months of charge and discharge cycling test, the internal resistance of the Ni-MH battery provided in Comparative Example 1 increased significantly, while the internal resistance of the Ni-MH battery provided in Example 1 did not increase much.

**Table 1**

| CycleNo. | Temp. | Charge method | Discharge method | Req. |
|---|---|---|---|---|
| | RT | 0.1C x 16hrs | 0.2C to 1V | ≥100%NC |
| | 40deg.C | 0.05C x 24hrs | 0.25C to 1V | ≥75%NC |
| | 80deg.C | 0.05C x 30days | 0.25C to 1V | |
| 1 month | 40deg.C | 0.05C x 24hrs | 0.25C to 1V | ≥75%NC |
| | 80deg.C | 0.05C x 30days | 0.25C to 1V | |
| 2 month | 40deg.C | 0.05C x 24hrs | 0.25C to 1V | ≥75%NC |
| | 80deg.C | 0.05C x 30days | 0.25C to 1V | |
| 3 month | 40deg.C | 0.05C x 24hrs | 0.25C to 1V | ≥75%NC |
| | 80deg.C | 0.05C x 30days | 0.25C to 1V | |
| 4 month | 40deg.C | 0.05C x 24hrs | 0.25C to 1V | ≥75%NC |
| | 80deg.C | 0.05C x 30days | 0.25C to 1V | |
| 5 month | 40deg.C | 0.05C x 24hrs | 0.25C to 1V | ≥75%NC |
| | 80deg.C | 0.05C x 30days | 0.25C to 1V | |
| 6 month | 40deg.C | 0.05C x 24hrs | 0.25C to 1V | ≥75%NC |
| | 80deg.C | 0.05C x 30days | 0.25C to 1V | |
| 7 month | 40deg.C | 0.05C x 24hrs | 0.25C to 1V | ≥75%NC |
| | 80deg.C | 0.05C x 30days | 0.25C to 1V | |
| 8 month | 40deg.C | 0.05C x 24hrs | 0.25C to 1V | ≥75%NC |
| | 80deg.C | 0.05C x 30days | 0.25C to 1V | |
| 9 month | 40deg.C | 0.05C x 24hrs | 0.25C to 1V | ≥75%NC |
| | 80deg.C | 0.05C x 30days | 0.25C to 1V | |
| 10month | 40deg.C | 0.05C x 24hrs | 0.25C to 1V | ≥75%NC |

After the charge and discharge cycling test, the change of the discharge time of the nickel-hydrogen battery provided by Example 1 and the change of the discharge time of the nickel-hydrogen battery provided by Comparative Example 1 are shown in Figure 2. After 10 months of charge and discharge cycling test, the discharge capacity of the Ni-MH battery provided by Example 1 in a high temperature environment is still not less than 75% of the nominal capacity (NC).

The various technical features of the above-mentioned embodiments can be combined arbitrarily. For the sake of concise description, all possible combinations of the various technical features in the above-mentioned embodiments are not described. However, any combination of these technical features should be considered as within the scope of this specification as long as long as there is no contradiction.

The embodiments were chosen and described in order to best explain the principles of the invention and its practical application, thereby enabling others skilled in the art to understand the invention for various embodiments and with various modifications that are suited to the particular use contemplated. While the methods disclosed herein have been described with reference to particular operations performed in a particular order, it will be understood that these operations may be combined, sub-divided, or re-ordered to form an equivalent method without departing from the teachings of the present disclosure. Accordingly, unless specifically indicated herein, the order and grouping of the operations are not limitations. While the apparatuses disclosed herein have been described with reference to particular structures, shapes, materials, composition of matter and relationships...etc., these descriptions and illustrations are not limiting. Modifications may be made to adapt a particular situation to the objective, spirit and scope of the present disclosure. All such modifications are intended to be within the scope of the claims appended hereto.

## Claims

1. A nickel-metal hydride battery comprising:
a positive electrode including:
a positive electrode active material made of spherical nickel hydroxide coated with β-CoOOH;
a positive electrode additive containing tungsten, zinc and at least one of yttrium and ytterbium;
a separator made of a grafted or fluorinated or sulfonated polypropylene separator;
an electrolyte solution made of an alkaline aqueous solution, wherein the alkaline aqueous solution is an alkali metal hydroxide having a concentration ranging from 5.5 mol/L to 8.0 mol/L;
a negative electrode including a negative electrode additive containing yttrium.

2. The nickel-metal hydride battery according to claim 1, **characterized in that**: the spherical nickel hydroxide is coated with the β-CoOOH by chemical vapor deposition.

3. The nickel-metal hydride battery according to claim 1, **characterized in that**: the tungsten contained in the positive electrode additive is derived from tungsten oxide; and the tungsten has a mass fraction ranging from 0.1% to 2% of a total mass of the positive electrode active material and the positive electrode additive.

4. The nickel-metal hydride battery according to claim 1, **characterized in that**: the zinc contained in the positive electrode additive is derived from zinc oxide; and the zinc has a mass fraction ranging from 0.1% to 2% of a total mass of the positive electrode active material and the positive electrode additive.

5. The nickel-metal hydride battery according to claim 1, **characterized in that**: the positive electrode additive contains yttrium; the yttrium is derived from yttrium oxide; and the contained yttrium has a mass fraction ranging from 0.1% to 2% of a total mass of the positive electrode active material and the positive electrode additive.

6. The nickel-metal hydride battery according to claim 1, **characterized in that**: the positive electrode additive contains ytterbium; the ytterbium is derived from ytterbium oxide; and the contained ytterbium has a mass fraction ranging from 0.1% to 2% of a total mass of the positive electrode active material and the positive electrode additive.

7. The nickel-metal hydride battery according to claim 1, **characterized in that**: the positive electrode additive contains yttrium and ytterbium; the contained yttrium is derived from yttrium oxide; the contained ytterbium is derived from ytterbium oxide; the contained yttrium oxide and the contained ytterbium oxide have a total mass fraction ranging from 0.1% to 2% of a total mass of the positive electrode active material and the positive electrode additive.

8. The nickel-metal hydride battery according to claim 1, **characterized in that**: the yttrium contained in the negative electrode additive is derived from yttrium oxide, and the contained yttrium has a mass fraction ranging from 0.1% to 2% of a total mass of the negative electrode active material and the negative electrode additive.

9. The nickel-metal hydride battery according to claim 1, **characterized in that**: the alkali metal hydroxide is composed of potassium hydroxide, sodium hydroxide and lithium hydroxide.

10. The nickel-metal hydride battery according to claim 9, **characterized in that**: the sodium hydroxide has a concentration ranging from 5.5 to 7 mol/L, the potassium hydroxide has a concentration ranging from 0 to 0.5mol/L; and the lithium hydroxide has a concentration ranging from 0 to 0.5mol/L.
